# EUROPEAN PATENT SPECIFICATION

(11) **EP 3 250 331 B1**
(45) Date of publication and mention of the grant of the patent: **26.12.2018**
(21) Application number: 15708321.3
(22) Date of filing: 30.01.2015
(51) Int. Cl.: B09B 3/00, A47J 31/44, B09B 5/00

(54) **AN APPARATUS FOR TREATING USED CAPSULES AND/OR CARTRIDGES, FOR EXAMPLE OF COFFEE OR SOME OTHER INFUSION, FOR SEPARATION OF THE ORGANIC MATERIAL FORM THE REST OF THE PACK**
VORRICHTUNG ZUR BEHANDLUNG BENUTZTER KAPSELN UND/ODER KARTUSCHEN, Z. B. VON KAFFEE ODER ANDEREN INFUSIONEN, ZUR TRENNUNG DES ORGANISCHEN MATERIALS VOM REST DER VERPACKUNG
APPAREIL DE TRAITEMENT DE CAPSULES USAGÉES ET/OU DE CARTOUCHES, PAR EXEMPLE DE CAFÉ OU D'UNE AUTRE INFUSION, POUR LA SÉPARATION DE LA MATIÈRE ORGANIQUE DU RESTE DE L'EMBALLAGE

(43) Date of publication of application: 06.12.2017
(73) Proprietor: Ceccarelli, Stefano, 02100 Rieti (RI) (IT); Costantini, Paolo, 00199 Roma (RM) (IT)
(72) Inventor: Ceccarelli, Stefano, 02100 Rieti (RI) (IT); Costantini, Paolo, 00199 Roma (RM) (IT)
(74) Representative: Fezzardi, Antonio
(86) International application number: PCT/IB2015/050721
(87) International publication number: WO 2016/120668

(56) References cited:
- WO-A1-88/00908
- WO-A1-2009/153298
- WO-A1-2011/051867
- FR-A1- 2 916 126
- JP-A- 2001 121 009
- JP-A- 2009 173 294
- US-A- 5 924 834

## Description

The present invention relates to the sector of electrical household appliances and in particular regards an apparatus designed to tear/split or divide into two or more parts the pack of the cartridge and/or capsule and consequently cause exit of the dregs of coffee so as to separate the organic part from the pack, thus guaranteeing the possibility of disposing of the organic waste separately from the waste of the pack, which is recyclable.

For brevity of exposition, in the present patent text reference will be made to capsules, but it is to be understood that the invention may be applied indifferently to capsules and/or cartridges.

According to the invention, the above apparatus can be positioned directly in domestic premises, for example, in a kitchen, or else may be installed directly inside larger coffee-vending machines (obviously, ones that use cartridges or capsules), such as the ones installed in offices, firms, and restaurants, and in general where espresso-coffee machines that use capsules are present (such as, for example, on board trains, aircraft, cruise liners, etc.) .

Known to the art are devices for separating the organic material contained in spent capsules from the rest of the pack, like for example from documents WO 2009/153298 A1, US 5 924 834 A or WO 2011/051867 A1, but a problem common to these apparatuses is represented by the fact that said separation is not complete, and consequently the treated packs are not completely emptied of their original organic contents. This prevents disposal thereof as differentiated waste, substantially rendering vain the treatment of the spent capsules that is carried out using said known apparatuses. The current alternative would be to subject the treated capsules to additional processes in order to eliminate from the packs the residue of organic material, with evident supplementary costs.

Another problem of these known apparatuses is represented by their very large dimensions, which render them usable only at an industrial level.

Currently, there are not known electrical household appliances or apparatuses that are able to treat coffee capsules to facilitate ecological disposal/recycling thereof, i.e., that are able to perform complete separation, collection, and storage of the various materials comprised in each capsule so as to "convert" spent capsules from undifferentiated waste (as they are currently considered) to waste that is separated, differentiated, and hence recyclable and/or easily disposable.

The above entails a series of drawbacks.

A first drawback is represented by the fact that said capsules are by now filling refuse dumps.

A second drawback, deriving from the first, is that the lack of recycling of the recyclable parts of the capsules, which are usually made of aluminium and/or plastic, renders the capsules themselves more costly.

Consequently, some firms that produce capsules are currently seeking to encourage consumers to take the spent capsules back to where they were originally purchased so that they can then treat them at an industrial level to separate and recycle the materials that make them up.

The purpose of the present invention is to overcome the above drawbacks by providing an apparatus that can be installed directly where the capsules are used in order to be able to carry out separation of the materials of which the coffee capsules are made up immediately after their use so that it will be possible to collect the recyclable materials separately from the organic ones in order to facilitate differentiated collection, which by now is increasingly widespread.

According to the invention, the foregoing has been achieved by providing an apparatus that comprises, in combination:
- a supporting structure, which can be assembled with extreme ease and is provided with a compartment for receiving and treating the capsules of coffee or some other infusion;
- mechanical means, which are pre-arranged in said purposely provided compartment for treating the capsules and are designed to tear or break the packs thereof and consequently separate the organic contents from the various materials that constitute the packs, gathering the organic contents and the packs, respectively, in a first collection container and in a second collection container, which are distinct from one another and can be emptied into the normal containers provided for differentiated refuse collection;
- an inlet opening that enables said spent capsules to enter the treatment compartment, for example by dropping by gravity or via a motor-driven system;
- means for conveying the organic material coming out of the treated capsules into the purposely provided collection container;
- a first container, designed to receive the dregs of coffee or other infusion that have been separated from the rest of the capsule and that constitute an organic waste; and
- a second container, designed to receive the remains of the packs of the capsules that have been separated from the organic materials and that constitute recyclable waste material comprising paper, aluminium, plastic, etc.

There may also be envisaged a totally or partially transparent structure so that it is possible to check whether the capsules have been completely torn and emptied.

A better understanding of the invention will be obtained from the ensuing detailed description and with reference to the attached drawings, which illustrate, merely by way of example, some preferred embodiments.

In the drawings:

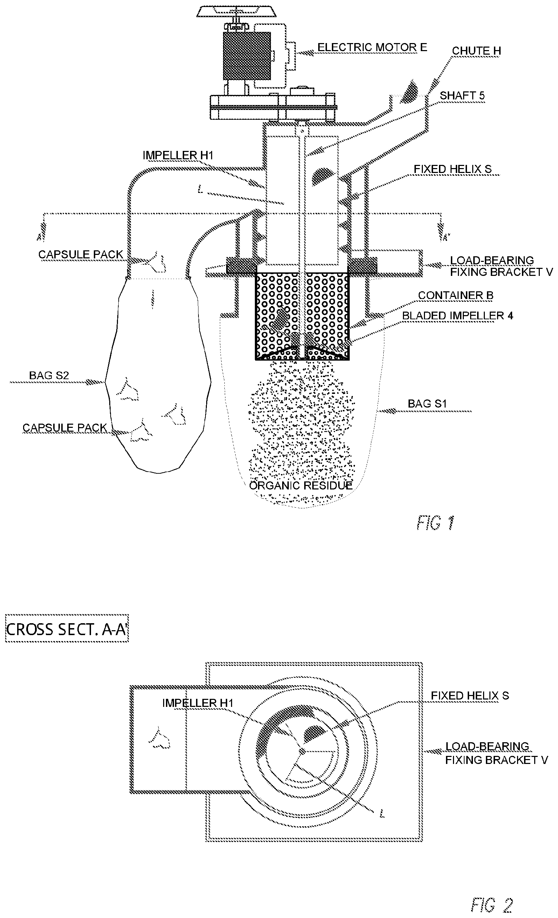

Figures 1 and 2 are schematic illustrations of a preferred embodiment of the apparatus forming the subject of the invention, respectively in longitudinal sectional view and in top plan view; and
Figures 3 and 4, which are respectively similar to the Figures 1 and 2, show a variant.

With reference to the figures cited above, in the example of embodiment described an apparatus for treatment of the capsules is provided, designed for being installed inside a vending machine for coffee (or other infusions) used in firms or commercial premises that functions with capsules or cartridges in such a way that the cartridges and/or capsules will be treated immediately after their use.

Another possibility is to install the apparatus described in a stand-alone way, obviously within a purposely designed box, pre-arranged for receiving from outside the spent capsules to be treated.

In either case, the apparatus according to the invention comprises, in combination:
- a bottom bag container S1 designed to collect the organic remains and to support basically the entire load-bearing structure of the apparatus;
- a container B located inside the previous one, which constitutes the treatment compartment and is provided with perforated walls and housed inside which is a bladed impeller 4 set in rotation by means of a shaft 5;
- a fixed conveyor D, set on the upper part of the perforated container B, in which the capsules are treated;
- a top bag container S2 for collecting and storing the packs of the treated capsules;
- an electric motor E, designed to be driven by the user to turn the shaft 5 whenever at least one spent capsule to be treated is introduced; and
- a chute H for getting the capsules to enter the treatment compartment provided in the bottom container B.

According to the invention, it is envisaged to cut up/tear the pack of each capsule via said one or more blades of the bottom impeller 4 that have different shape and size in order to obtain complete mechanical separation of the organic material from the rest of the capsule, and at the same time the organic waste is made to exit from the treatment compartment B through a plurality of self-cleaning holes or slots purposely provided on the lateral and bottom surfaces of the treatment compartment B itself. Emptying of the torn capsules is achieved thanks to the action of the centrifugal force generated by the rotary motion imparted by the blades of the impeller 4.

According to a peculiar characteristic of the invention, the inner surface of the perforated walls of the compartment B for treatment of the capsules may be provided with elements in relief or with recesses appropriately positioned to prevent the capsules from possibly remaining stuck to the blades of the impeller 4 and turning together with them without tearing.

According to the invention, a system for conveying the empty packs of the treated capsules is provided, which is basically made up of a fixed helix S set peripherally inside a cylinder (or a cone tapered upwards) and an impeller H1 with one or more substantially vertical blades L, said impeller turning inside the fixed helix S.

It is preferable to provide, on the outer edge of each blade L, throughout its height, a sort of brush, thus enabling the edge of the blade itself to pass beyond the thickness of the fixed helix S without interfering with the latter, so making it possible to reach the surface of the wall of the cylinder itself without any risk of mechanical interference.

The centrifugal force exerted on the empty packs by the impeller H1, which is in turn fixed to the electric motor via the shaft 5, pushes each pack emptied of the organic material towards the fixed helix S so that this is traversed in a rotary direction by the empty pack until the latter reaches the exit and drops into the collection bag S2.

Introduction of the capsules to be treated may be made with the motor stationary or else with the motor running.

It should be noted that it may also be envisaged that the treatment of breaking/tearing of the capsules is obtained with the impeller 4 that turns in the direction opposite to the direction of the auger 3. In this case, after the capsules have been torn, the direction of rotation of the motor can be reversed so that the impeller can entrain the empty packs and expel them.

The entire operating cycle may be performed manually by the user, i.e., visually checking progress thereof, or else automatically under the control of an electronic card, which, by means of appropriate sensors positioned in strategic points, keeps the apparatus in safe running conditions and checks for the presence of capsules to be treated in order to activate the device when necessary.

The means designed to drive the apparatus described comprise an electrical system with at least two pushbuttons:
- a main ON/OFF switch; and
- a switch for start of the treatment cycle.

It is preferable to provide, especially in the case of automatic operation, warning lights that signal that the apparatus according to the invention is on, that capsules to be treated are present, that treatment is through, etc.

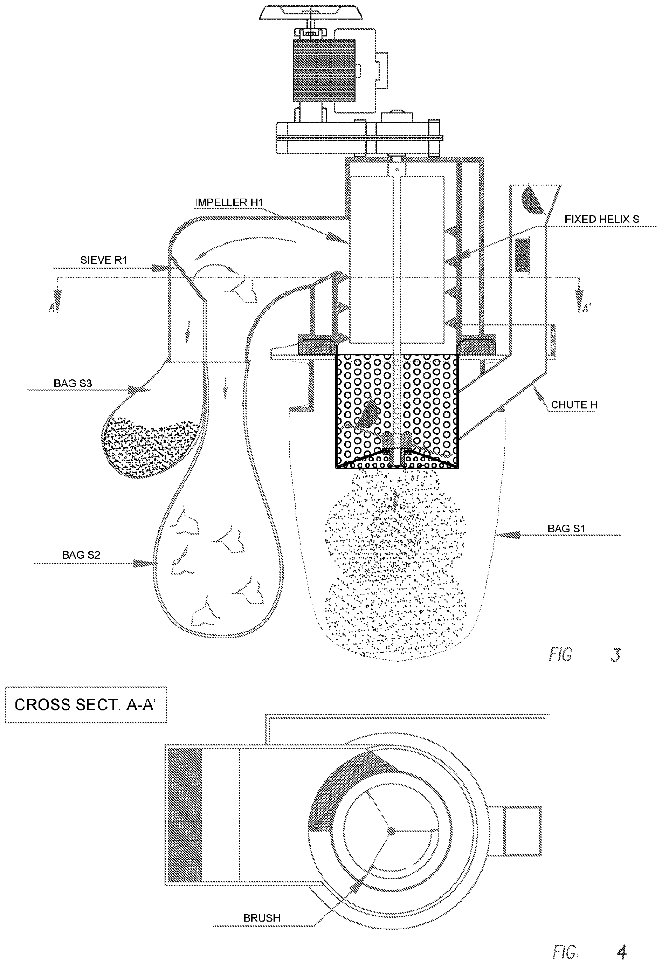

With reference to Figures 3 and 4, a variant of the invention envisages that the inlet for the cartridges and/or capsules is directly shifted on the perforated container B.

Moreover, this variant envisages also at least one mesh or sieve R1 (of variable shape and size according to the requirements in terms of percentage of organic residue with respect to the pack) set at the outlet from which the bits of the pack of the cartridges or capsules already treated exit. Operation of said mesh or sieve R1 is simple: the packs emptied of the organic part, by exiting speedily from the cylinder with fixed helix S in which the blades L of the impeller H1 turn, impact against the mesh R1, and the possible grains of the organic part pass beyond it, then dropping into a further bag S3, which collects the possible residue of organic material, like the bag S1.

In this connection, the duct provided for filling the bag S3 could be made to reach directly the bag S1, thus eliminating the need to provide said additional bag S3.

It should be noted that the presence of the sieve or mesh R1 is important because it guarantees a further separation of the two materials of which the cartridges and/or capsules are made up and enables treatment of the cartridges and/or capsules even at a rate of one per second, in any case managing to obtain a practically zero residue of organic material in the treated packs.

Figure 4 also shows the vertical brushes on the edges of the blades L of the impeller H1 mentioned previously.

Finally, it should be recalled that what has been described so far as regards the present invention for treatment of capsules may be applied, without any modifications, to the treatment of the well-known cartridges made of plastic, aluminium, etc.

## Claims

1. An apparatus for treating spent cartridges and/or capsules, for example of coffee or some other infusion, in order to separate the organic material from the rest of the pack, **characterized in that** it comprises, in combination:
- mechanical means, which are contained in a purposely provided compartment for treating the capsules and are designed to break or tear the packs thereof and consequently separate the organic contents from the various materials that constitute the packs, gathering the organic contents and the packs, respectively, in a first collection container and in a second collection container, distinct from one another, which can be emptied into the normal containers provided for differentiated refuse collection;
- a bag (S1) for collecting organic waste;
- a second bag (S2) for collecting the emptied packs that have been separated from the organic materials and that constitute recyclable waste comprising paper, aluminium, plastic, etc.;
- a container (B), which constitutes the compartment for treatment of the capsules, is located inside the bag (S1), and is provided with perforated walls, and housed in which are said mechanical means, basically constituted by a bladed impeller (4) set in rotation by means of a shaft (5);
- a system for conveying the empty packs of the treated capsules, which is basically made up of a fixed helix (S) set peripherally inside a cylinder or cone tapered upwards and an impeller (H1) with one or more substantially vertical blades (L), said impeller turning within the fixed helix (S) for sending upwards the empty packs of the capsules so that they reach said second bag (S2) set preferably to one side;
- an electric motor (E), which, via the shaft (5), drives the impeller (H1) with blades (L) and the bottom bladed impeller (4); and
- a chute (H) for getting the capsules to enter the treatment compartment in the bottom container (B).

2. The apparatus according to Claim 1, **characterized in that** the centrifugal force exerted on the empty packs by the impeller (H1), which is in turn fixed to the electric motor via the shaft (5), pushes each pack emptied of the organic material towards the fixed helix (S) so that this is traversed in a rotary direction by the empty pack until the latter reaches the exit and drops into the collection bag (S2).

3. The apparatus according to Claim 2, **characterized in that** entry of the capsules to be treated can come about with the motor stationary or else with the motor running.

4. The apparatus according to Claim 1, **characterized in that** said one or more blades of the bottom impeller (4) are of different shape and size for cutting up/tearing the pack of each capsule, as well as for imposing a rotary motion on the torn capsules that generates the centrifugal force necessary for obtaining mechanical separation of the organic material from the rest of the capsule and simultaneous exit of said organic material from the treatment compartment (B) through a plurality of self-cleaning holes or slots purposely provided on the lateral surface of the treatment compartment (B) itself.

5. The apparatus according to Claim 4, **characterized in that** the inner surface of the perforated walls of the compartment (B) for treatment of the capsules is provided with elements in relief or with recesses appropriately positioned to prevent the capsules from possibly remaining stuck to the blades of the impeller (4) and turning together with them without tearing.

6. The apparatus according to any one of the preceding claims, **characterized in that** the electric motor (E) is in the top part of the device or else in the bottom part thereof.

7. The apparatus according to any one of the preceding claims, **characterized in that** the operating cycle is managed manually by the user, i.e., by visually checking progress thereof, or else automatically under the control of an electronic card, which, by means of appropriate sensors positioned in strategic points, keeps the apparatus in safe running conditions and checks for the presence of capsules to be treated to activate the device when necessary.

8. The apparatus according to Claim 7, **characterized in that** it comprises an electrical system with at least two pushbuttons:
- a main ON/OFF switch; and
- a switch for start of the treatment cycle.

9. The apparatus according to Claim 8, **characterized in that** it envisages warning lights that signal that the apparatus according to the invention is on, that capsules to be treated are present, that treatment is through, etc.

10. The apparatus according to Claim 2, **characterized in that** entry of the capsules to be treated can come about with the motor stationary or else with the motor running, but turning in a direction opposite to that with which the auger (3) entrains the capsules; the foregoing being provided so that the treatment of breaking/tearing of the capsules is obtained with the impeller (4) that turns in the direction opposite to the direction of the auger (3), thus obtaining that, after the capsules have been torn, the direction of rotation of the motor can be reversed so that the impeller can entrain the empty packs to expel them.

11. The apparatus according to any one of the preceding claims, **characterized in that** the blades (L) of the impeller (H1) generate also a movement of air that, in combination with the peripheral fixed helix (S), is able to entrain and convey upwards only the empty packs, which are particularly light because they are emptied of the organic contents.

12. The apparatus according to any one of the preceding claims, **characterized in that** provided on the outer edge of each blade (L), throughout its height, is a sort of brush, to enable the edge of the blade itself to pass beyond the thickness of the fixed helix (S) without interfering with the latter so that it can reach the surface of the wall of the cylinder itself without any risk of mechanical interference.

13. The apparatus according to any one of the preceding claims, **characterized in that** at the outlet from where the bits of the pack of the cartridges and/or capsules already treated exit, a mesh or sieve (R1) is provided, impacting against which are said packs that exit speedily from the cylinder with fixed helix (S) in which the blades (L) of the impeller (H1) turn in such a way that any possible grains of the organic part pass beyond the mesh (R1) itself, then dropping into a further bag (S3), which collects the possible residue of organic material, or else into a discharge duct connected to the bag (S1).

## Patentansprüche

1. Vorrichtung zur Aufbereitung von verbrauchten Kartuschen und/oder Kapseln, zum Beispiel von Kaffee oder einer anderen Aufgusses, um das organische Material von dem Rest der Verpackung zu trennen, **dadurch gekennzeichnet, dass** sie, in Kombination, umfasst:
- mechanische Mittel, welche in einem zweckdienlich vorgesehenen Fach zur Aufbereitung der Kapseln enthalten sind und ausgestaltet sind, um die Verpackungen von diesen zu zerbrechen oder zu zerreißen und somit die organischen Inhalte von den verschiedenen Materialien, aus denen die Verpackungen bestehen, zu trennen, wobei die organischen Inhalte beziehungsweise die Verpackungen in einem ersten Sammelbehälter und in einem zweiten Sammelbehälter angesammelt werden, die voneinander verschieden sind und die in die normalen Behälter, die für die getrennte Abfallsammlung vorgesehen sind, ausgeleert werden können;
- einen Beutel (S1) zum Sammeln von organischem Abfall;
- einen zweiten Beutel (S2) zum Sammeln der geleerten Verpackungen, die von den organischen Materialien getrennt worden sind und die aus wiederverwertbaren Abfall, der Papier, Aluminium, Kunststoff usw. umfasst, bestehen;
- einen Behälter (B), welcher aus dem Fach zur Aufbereitung der Kapseln besteht und innerhalb des Beutels (S1) angeordnet und mit perforierten Wänden versehen ist, wobei in diesem die mechanischen Mittel untergebracht sind, die im Wesentlichen durch ein mit Klingen versehenes Laufrad (4) bestehen, welches mittels einer Welle (5) in Rotation versetzt wird;
- ein System zum Befördern der leeren Verpackungen der aufbereiteten Kapseln, welches im Wesentlichen aus einer festen Spirale (S), die peripher in einem Zylinder oder einem sich nach oben verjüngenden Kegel festgelegt ist, und einem Laufrad (H1) mit einem oder mehreren im Wesentlichen vertikalen Klingen (L) besteht, wobei das Laufrad sich innerhalb der festen Spirale (S) dreht, um die leeren Verpackungen der Kapseln derart nach oben zu senden, dass sie den zweiten Beutel (S2) erreichen, der vorzugsweise an einer Seite festgelegt ist;
- einen Elektromotor (E), der über die Welle (5) das Laufrad (H1) mit Klingen (L) und das untere mit Klingen versehene Laufrad (4) antreibt; und
- eine Rutsche (H) zum Veranlassen der Kapseln, in das Aufbereitungsfach in dem unteren Behälter (B) einzutreten.

2. Vorrichtung nach Anspruch 1, **dadurch gekennzeichnet, dass** die Zentrifugalkraft, die auf die leeren Verpackungen durch das Laufrad (H1) ausgeübt werden, welches wiederum über die Welle (5) an den Elektromotor befestigt ist, jede Packung, die von dem organischen Material geleert wurde, derart zu der festen Spirale (S) geschoben wird, dass die leere Verpackung diese in einer Drehrichtung durchquert, bis letztere den Ausgang erreicht und in den Sammelbeutel (S2) fällt.

3. Vorrichtung nach Anspruch 2, **dadurch gekennzeichnet, dass** der Eintritt der aufzubereitenden Kapseln bei ruhendem Motor oder andernfalls bei laufendem Motor zustande kommen kann.

4. Vorrichtung nach Anspruch 1, **dadurch gekennzeichnet, dass** die eine oder die mehreren Klingen des unteren Laufrads (4) von unterschiedlicher Form und Größe sind zum Aufschneiden/Zerreißen der Verpackung jeder Kapsel sowie zum Veranlassen einer Drehbewegung an den zerrissenen Kapseln, die die Zentrifugalkraft erzeugt, die benötigt wird zum Erhalten der mechanischen Trennung des organischen Materials von dem Rest der Kapsel und des gleichzeitigen Austritts des organischen Materials von dem Aufbereitungsfach (B) durch eine Vielzahl von selbstreinigenden Löchern oder Schlitzen, die zweckmäßig an der Seitenfläche des Aufbereitungsfachs (B) selbst vorgesehen sind.

5. Vorrichtung nach Anspruch 4, **dadurch gekennzeichnet, dass** die Innenfläche der perforierten Wände des Fachs (B) zur Aufbereitung der Kapseln mit Reliefelementen oder mit Vertiefungen, die dementsprechend positioniert sind, versehen ist, um die Kapseln daran zu hindern, möglicherweise an den Klingen des Laufrads (4) stecken zu bleiben und sich mit diesen zu drehen, ohne zu zerreißen.

6. Vorrichtung nach einem der vorhergehenden Ansprüche, **dadurch gekennzeichnet, dass** der Elektromotor (E) sich in dem oberen Teil des Geräts oder andernfalls in dem unteren Teil davon befindet.

7. Vorrichtung nach einem der vorhergehenden Ansprüche, **dadurch gekennzeichnet, dass** der Betriebszyklus manuell von dem Benutzer, d. h., indem visuell der Verlauf davon überprüft wird, oder andernfalls automatisch unter der Steuerung einer elektronischen Karte geführt wird, welche mittels geeigneten Sensoren, die an strategischen Stellen positioniert sind, die Vorrichtung bei sicheren Betriebsbedingungen hält und das Vorhandensein von aufzubereitenden Kapseln überprüft, um das Gerät, wenn nötig, zu aktivieren.

8. Vorrichtung nach Anspruch 7, **dadurch gekennzeichnet, dass** sie ein elektrisches System mit mindestens zwei Drucktasten umfasst:
- einen EIN-/AUS-Hauptschalter; und
- einen Schalter zum Starten des Aufbereitungszyklus.

9. Vorrichtung nach Anspruch 8, **dadurch gekennzeichnet, dass** sie Warnlichter vorsieht, die signalisieren, dass die Vorrichtung gemäß der Erfindung eingeschalten ist, dass aufzubereitende Kapseln vorhanden sind, dass die Aufbereitung fertig ist usw.

10. Vorrichtung nach Anspruch 2, **dadurch gekennzeichnet, dass** der Eintritt der aufzubereitenden Kapseln bei ruhendem Motor oder andernfalls bei laufendem Motor zustande kommen kann, jedoch in eine Richtung dreht, die der, in der die Förderschnecke (3) die Kapseln mitreißt, entgegengesetzt ist; wobei das Vorstehende derart bereitgestellt wird, dass die Aufbereitung des Brechens/Zerreißens der Kapseln mit dem Laufrad (4) erhalten wird, das in der Richtung dreht, die der Richtung der Förderschnecke (3) entgegengesetzt ist, wodurch erreicht wird, dass, nachdem die Kapseln zerrissen worden sind, die Rotationsrichtung des Motors umgekehrt werden kann, so dass das Laufrad die leeren Verpackungen mitreißen kann, um sie auszustoßen.

11. Vorrichtung nach einem der vorhergehenden Ansprüche, **dadurch gekennzeichnet, dass** die Klingen (L) des Laufrads (H1) ebenfalls eine Bewegung der Luft erzeugen, die in Kombination mit der peripheren festen Spirale (S) in der Lage ist, die leeren Verpackungen, die besonders leicht sind, da sie von dem organischen Inhalt geleert sind, nur nach oben mitzureißen und zu befördern.

12. Vorrichtung nach einem der vorhergehenden Ansprüche, **dadurch gekennzeichnet, dass** an der Außenkante jeder Klinge (L) entlang ihrer Höhe eine Art Bürste vorgesehen ist, um zu ermöglichen, dass die Kante der Klinge selbst über die Dicke der festen Spirale (S) hinausgeht, ohne dabei letztere zu beeinträchtigen, so dass sie die Fläche der Wand des Zylinders selbst ohne jegliches Risiko einer mechanischen Beeinträchtigung erreichen kann.

13. Vorrichtung nach einem der vorhergehenden Ansprüche, **dadurch gekennzeichnet, dass** an dem Auslass, an dem die Teile der Verpackung der Kartuschen und/oder Kapseln, die bereits aufbereitet wurden, austreten, ein Gitter oder ein Sieb (R1) vorgesehen ist, auf welches die Verpackungen, die aus dem Zylinder mit fester Spirale (S), in der die Klingen (L) des Laufrads (H1) drehen, zügig austreten, auf eine solche Weise fallen, dass mögliche Körnchen des organischen Teils durch das Gitter (R1) selbst hindurchgehen, dann in einen weiteren Beutel (S3), der die möglichen Reste von organischem Material sammelt, oder andernfalls in eine Ausflussleitung, die mit dem Beutel (S1) verbunden ist, fallen.

## Revendications

1. Appareil de traitement de capsules et/ou de cartouches usagées, par exemple de café ou d'une autre infusion, de manière à séparer la matière organique du reste de l'emballage, **caractérisé en ce qu'**il comprend, en combinaison :
- des moyens mécaniques, qui sont contenus dans un compartiment prévu à cet effet pour le traitement des capsules et sont conçus pour rompre ou déchirer les emballage de celles-cu et par conséquent séparer les contenus organiques des divers matériaux qui constituent les emballages, en collectant les contenus organiques et les emballages, respectivement dans un premier récipient de récupération et dans un deuxième récipient de récupération, distinct l'un de l'autre, qui peuvent être vidés dans des récipients normaux prévus pour la collecte différenciée de déchets ;
- un sac (S1) pour la récupération des déchets organiques ;
- un deuxième sac (S2) pour la récupération des emballages vides qui ont été séparés des matières organiques et qui constituent des déchets recyclables comprenant le papier, l'aluminium, le plastique, etc. ;
- un récipient (B), qui constitue le compartiment pour le traitement des capsules, est situé à l'intérieur du sac (S1) et est pourvu de parois perforées, et dans lequel sont logés lesdits moyens mécaniques, constitués fondamentalement par une roue à aubes (4) mise en rotation au moyen d'un arbre (5) ;
- un système pour acheminer les emballages vides des capsules traitées, qui est fondamentalement constitué d'une hélice fixe (S) installée de manière périphérique à l'intérieur d'un cylindre ou d'un cône effilé vers le haut et d'une roue (H1) avec une ou plusieurs aubes sensiblement verticales (L), ladite roue tournant avec l'hélice fixe (S) pour transférer vers le haut les emballages vides des capsules de manière qu'elles atteignent ledit deuxième sac (S2) installé de préférence sur un côté ;
- un moteur électrique (E) qui, au moyen de l'arbre (5), entraîne la roue (H1) avec des aubes (L) et la roue à aubes inférieure (4) ; et
- une goulotte (H) pour amener les capsules à pénétrer dans le compartiment de traitement dans le récipient inférieur (B).

2. Appareil selon la revendication 1, **caractérisé en ce que** la force centrifuge exercée sur les emballages vides par la roue (H1), qui est fixée à son tour au moteur électrique au moyen de l'arbre (5), pousse chaque emballage vidé de la matière organique vers l'hélice fixe (S) de manière qu'elle soit traversée dans une direction de rotation par l'emballage vide jusqu'à ce que ce dernier atteigne la sortie et tombe dans le sac de récupération (S2) .

3. Appareil selon la revendication 2, **caractérisé en ce que** l'entrée des capsules à traiter peut survenir avec le moteur immobile ou bien avec le moteur en marche.

4. Appareil selon la revendication 1, **caractérisé en ce que** lesdites une ou plusieurs aubes de la roue inférieure (4) sont de forme et dimension différentes pour découper ou déchirer l'emballage de chaque capsule, ainsi que pour imposer un mouvement de rotation aux capsules déchirées qui génère la force centrifuge nécessaire pour obtenir la séparation mécanique de la matière organique du reste de la capsule et la sortie simultanée de ladite matière organique du compartiment de traitement (B) à travers une pluralité de fentes ou trous autonettoyants prévus à cet effet sur la surface latérale du compartiment de traitement (B) lui-même.

5. Appareil selon la revendication 4, **caractérisé en ce que** la surface intérieure des parois perforées du compartiment (B) pour le traitement des capsules est munie d'éléments en relief ou de renfoncements positionnés de manière appropriée pour empêcher les capsules de rester éventuellement collées aux aubes de la roue (4) et de tourner avec elles sans les déchirer.

6. Appareil selon l'une quelconque des revendications précédentes, **caractérisé en ce que** le moteur électrique (E) est dans la partie supérieure du dispositif ou bien dans la partie inférieure de celui-ci.

7. Appareil selon l'une quelconque des revendications précédentes, **caractérisé en ce que** le cycle de fonctionnement est géré manuellement par l'utilisateur, c'est-à-dire en contrôlant visuellement son avancement, ou bien automatiquement sous le contrôle d'une carte électronique qui, au moyen de capteurs appropriés positionnés dans des points stratégiques, maintient l'appareil dans des conditions de fonctionnement sûres et contrôle la présence de capsules à traiter pour activer le dispositif quand cela est nécessaire.

8. Appareil selon la revendication 7, **caractérisé en ce qu'**il comprend un système électrique avec au moins deux boutons poussoirs :
- un interrupteur principal marche/arrêt ; et
- un commutateur pour démarrer le cycle de traitement.

9. Appareil selon la revendication 8, **caractérisé en ce qu'**il prévoit des voyants d'avertissement qui signalent que l'appareil selon l'invention est activé, que des capsules à traiter sont présentes, que le traitement est en cours, etc.

10. Appareil selon la revendication 2, **caractérisé en ce que** l'entrée des capsules à traiter peut survenir avec le moteur immobile ou bien avec le moteur en marche, mais tournant dans une position opposée à celle avec laquelle la vrille (3) entraîne les capsules ; ce qui précède étant prévu de manière que le traitement de rupture/déchirement des capsules soit obtenu avec la roue (4) qui tourne dans la direction opposée à la direction de la vrille (3), en obtenant ainsi que, après que les capsules ont été déchirées, la direction de rotation du moteur puisse être inversée de manière que la roue puisse entraîner les emballages vides pour les expulser.

11. Appareil selon l'une quelconque des revendications précédentes, **caractérisé en ce que** les aubes (L) de la roue (H1) génèrent également un mouvement d'air qui, en combinaison avec l'hélice fixe périphérique (S), soit capable d'entraîner et acheminer vers le haut seulement les emballages vides, qui sont particulièrement légers du fait qu'ils sont vidés de leur contenu organique.

12. Appareil selon l'une quelconque des revendications précédentes, **caractérisé en ce qu'**un genre de brosse est prévu sur le bord extérieur de chaque aube (L), sur toute sa hauteur, pour permettre au bord de l'aube elle-même de passer au-delà de l'épaisseur de l'hélice fixe (S) sans interférer avec cette dernière de manière qu'il puisse atteindre la surface de la paroi du cylindre lui-même sans aucun risque d'interférence mécanique.

13. Appareil selon l'une quelconque des revendications précédentes, **caractérisé en ce que**, au niveau de la sortie d'où sortent les morceaux de l'emballage des cartouches et/ou capsules déjà traitées, un treillis ou tamis (R1) est disposé, contre lequel viennent en contact lesdits emballages qui sortent rapidement du cylindre avec l'hélice fixe (S) dans laquelle les aubes (L) de la roue (H1) tournent de telle manière que tous les éventuels grains de la partie organique passent au-delà du treillis (R1) lui-même, puis tombent dans un autre sac (S3), qui recueille l'éventuel résidu de matière organique, ou bien dans un conduit d'évacuation connecté au sac (S1).
